**Europäisches Patentamt**

**European Patent Office**

**Office européen des brevets**

(19)

(11) Veröffentlichungsnummer: **0 116 851**
**B1**

# EUROPÄISCHE PATENTSCHRIFT

(12)

(45) Veröffentlichungstag der Patentschrift:
16.09.87

(21) Anmeldenummer: **84100412.0**

(22) Anmeldetag: **17.01.84**

(51) Int. Cl.⁴: **G 21 C 7/24**, C 04 B 35/50,
C 04 B 35/58

(54) **Polykristalline Sinterkörper auf Basis Europiumhexaborid und Verfahren zu ihrer Herstellung.**

(30) Priorität: **20.01.83 DE 3301841**

(43) Veröffentlichungstag der Anmeldung:
**29.08.84 Patentblatt 84/35**

(45) Bekanntmachung des Hinweises auf die Patenterteilung:
**16.09.87 Patentblatt 87/38**

(84) Benannte Vertragsstaaten:
**AT BE CH DE FR GB IT LI NL SE**

(56) Entgegenhaltungen:
Chemical Abstracts Band 93, Nr. 6, 11. August 1980,
Columbus, Ohio, USA K.A. SCHWETZ et al.
"Contribution to the system europium-boron-carbon",
Seite 614, Spalte 2, Abstract Nr. 56143m
Chemical Abstracts Band 92, Nr. 4, 28. Januar 1980,
Columbus, Ohio, USA D.E. MAHAGIN "Fast reactor
neutron absorber materials", Seite 547, Spalte 1,
Abstract Nr. 30513m
Chemical Abstracts Band 88, Nr. 22, 29. Mai 1978,
Columbus, Ohio, USA U. WEHMANN et al. "Absorber
materials for fast reactors", Seite 507, Spalte 2,
Abstract Nr. 160088e
AMERICAN CERAMIC SOCIETY BULLETIN, Band 60, Nr.
4, April 1981, Columbus G.W. HOLLENBERG et al.
"Hot-pressing of EuB6", Seiten 478-480
ATOMWIRTSCHAFT, Band 18, November 1973 K.

(73) Patentinhaber: **Elektroschmelzwerk Kempten GmbH,
Herzog-Wilhelm-Strasse 16, D-8000 München 2 (DE)**

(72) Erfinder: **Knoch, Heinrich, Dr., Dipl.-Ing., Zirbenweg 28,
D-8963 Waltenhofen-Lanzen (DE)**
Erfinder: **Schwetz, Karl-Alexander, Dr., Dipl.-Ing.,
Bergstrasse 4, D-8961 Sulzberg (DE)**
Erfinder: **Lipp, Alfred, Dr., Dipl.-Chem.,
Bürgermeister-Singer-Strasse 15, D-8939 Bad
Wörishofen (DE)**
Erfinder: **Bechler, Eckhart, Feilbergstrasse 37,
D-8960 Kempten (DE)**

(56) Entgegenhaltungen: (Fortsetzung)
SCHWETZ et al. "Die Verbindung EuB6 als
Absorberwerkstoff für schnelle Reaktoren", Seiten
531-534
ATOMWIRTSCHAFT, März 1972 H. SPENKE "Eignung
von Europium als Absorbermaterial in schnellen
Reaktoren", Seiten 161-164
Einführung in die Werkstoffwissenschaft (Schrift: 1978)
Introduction to Ceramics (Kingery et al. 1976)
National bureau of standards special publication 364,
solid state chemistry proceedings of 5th materials
research symposium, issued july 1972, Seiten 505-512

## Beschreibung

Es ist bekannt, dass Europiumhexaborid als Neutronenabsorberwerkstoff für Reaktoren vom Typ «Schneller Brüter» besondere Bedeutung zukommt, da es gegenüber dem bisher in der Kerntechnik bevorzugt verwendeten Borcarbid rein rechnerisch folgende Vorteile aufweist:

1. $EuB_6$ mit natürlicher B-Anreicherung ist reaktivitätsgleich mit 35 At-% B-10 angereichertem $B_4C$;

2. Der Druckaufbau durch Heliumbildung ist im $EuB_6$ mit 50% geringer als im reaktivitätsgleichen $B_4C$, damit ist mit $EuB_6$ eine doppelt so lange Standzeit möglich;

3. der Reaktivitätsverlust durch Abbrand ist im $EuB_6$ mit 40% geringer als im $B_4C$ (vgl. K.A. Schwetz et al in «Atomwirtschaft und Atomtechnik», Bd. 18 (1973), Seiten 531 – 534).

Die Herstellung von selbstgebundenen polykristallinen Sinterkörpern aus pulverförmigem Europiumhexaborid mit stöchiometrischer Zusammensetzung mit einer für den genannten Verwendungszweck ausreichenden Standfestigkeit und Dichte ist jedoch mit Schwierigkeiten verbunden.

Über Versuche zum drucklosen Sintern sind nur entmutigende Ergebnisse bekannt. Hierbei wurden Ausgangspulver mit Teilchengrössen $< 5\,\mu m$ ohne Bindemittel zu Grünkörpern mit 50 – 60% der theoretischen Dichte (im folgenden als % TD abgekürzt) vorverdichtet und dann unter Vakuum erhitzt. Bei Sintertemperaturen von 2.230° bis 2.730°C wurden nach 16 Stunden nur Sinterdichten von 63% TD erreicht, wobei gleichzeitig Gewichtsverluste von 40% auftraten. Bei niedrigeren Sintertemperaturen ($< 2.230°C$) wurde keine Verdichtung oder Schrumpfung beobachtet.

Durch Heisspressen bei 2.230°C im Vakuum konnten hingegen Sinterdichten von 90% TD erreicht werden, wobei allerdings eine beträchtliche Kornvergröberung zu beobachten war und eine Reaktion des Sinterkörpers mit der Graphitform (vgl. E.W. Hoyt et al in General Electric Report GEAP-3332, Contract No. AT (04-3) – 189, Atomic Energy Commission, June 6, 1960).

Durch niedrigere Temperaturen beim Heisspressen im Bereich von 1.850° bis 1.950°C konnten Sinterdichten bis zu 99% TD erzielt werden, wobei ebenfalls von einer Reaktion der Sinterkörper mit der Graphitform berichtet wurde. Die so erhaltenen Sinterkörper waren zwar einphasig, das heisst, es waren keine sekundären Phasen nachweisbar, aber sie zeigten eine bimodale Kornverteilung im Mikrogefüge, das aus einer Matrix mit Korngrössen $< 10\,\mu m$ bestand, die von grösseren Körnern mit bis zu $200\,\mu m$ umgeben war (vgl. A.E. Pasto et al in Trans. Amer. Nucl. Soc., Bd. 26 (1977), S. 176). Formkörper mit einem derartig inhomogegen Mikrogefüge sind selbstverständlich trotz der hohen Dichte nicht besonders standfest.

Durch weitere Herabsetzung der Sintertemperatur während des Heisspressens auf 1.700°C konnte die Reaktion mit der Graphitform vermindert und die Korngrösse besser kontrolliert werden. Das machte allerdings den Einsatz von submikronfeinem $EuB_6$-Pulver erforderlich, das durch 76 Stunden langes Vermahlen in einer WC-Kugelmühle hergestellt werden musste, was nicht nur unwirtschaftlich ist, sondern auch die Verunreinigung des Sinterkörpers durch Mahlabrieb nicht ausschliesst. Ausserdem wurde festgestellt, dass die Probleme während des Heisspressens offensichtlich mit dem Vorhandensein von freiem Europium zusammenhängen, was durch Anheben des Borgehalts, beispielsweise durch Zugabe von Bor oder Borcarbid in das Gebiet der Borüberschussphase behoben werden könnte. Pellets, die aus einer Mischung von $EuB_6$ + 5% Bor mit einer Porosität von 8% bei 1.700°C hergestellt wurden, hatten ein feineres Mikrogefüge als solche, die bei 2.150°C unter sonst gleichen Bedingungen erhalten wurden (vgl. G.W. Hollenberg et al in Ceramic Bulletin, Vol. 60 (1981), S. 478 – 480 und Referat in Chem. Abstr. Vol. 92 (1980) No. 46194 u).

Da offensichtlich eine ausreichende Verdichtung der $EuB_6$-Pulver stöchiometrischer Zusammensetzung ohne Zusatz von Bindemitteln nur durch Heisspressen erreicht werden konnte, andererseits das Heisspressen nur dann wirtschaftlich sinnvoll ist, wenn es unter Verwendung üblicher Graphitformen durchgeführt werden kann, wurden die möglichen Reaktionen von $EuB_6$ mit C oder $B_4C$ und die Phasenzusammensetzungen in dem Dreistoffsystem Eu-B-C näher untersucht. Dabei wurde in dem Abschnitt $EuB_6C$ eine temperaturabhängige, begrenzte Löslichkeit von C im $EuB_6$-Gitter festgestellt unter Bildung einer kristallinen Phase entsprechend der Formel $EuB_{6-x}C_x$, wobei x Werte von 0 bis 0,25 hat. Grössere Mengen als 3 Gewichtsprozent Kohlenstoff werden nicht mehr im $EuB_6$-Gitter gelöst, sondern führen zur Bildung zusätzlicher Phasen, die gegen Luftfeuchtigkeit empfindlich sind. In dem Abschnitt $EuB_6$-$B_4C$ wurde ebenfalls die oben angegebene kristalline Phase festgestellt, es wurden jedoch keine zusätzlichen Phasen gefunden. Es wird daher angenommen, dass der Abschnitt $EuB_6B_4C$ ein pseudobinäres System ist, in dem diese beiden Phasen im Gleichgewicht sind.

Aus diesen Untersuchungen wurde der Schluss gezogen, dass beim Heisspressen von $EuB_6$-Pulver mit stöchiometrischer Zusammensetzung in üblichen Graphitformen eine Aufkohlung des $EuB_6$ stattfindet unter Bildung der festen Lösung von $EuB_{6-x}C_x$, worin x die oben angegebene Bedeutung hat. Wenn jedoch bei der gewählten Sintertemperatur eine weitere Aufkohlung über die Löslichkeitsgrenze des Kohlenstoffs hinaus stattfindet, dann sind die so erhaltenen Sinterkörper nicht mehr beständig gegen Luftfeuchtigkeit, was mit dem Vorhandensein hydrolyseempfindlicher Europiumcarbid-oder Borocarbidphasen erklärt wird. Unter Einhaltung bestimmter Bedingungen, wie Vermeiden von zu hohen Sintertemperaturen während des Heisspressens und Verwendung von feinen $EuB_6$-Pulvern als Ausgangsmaterial können jedoch stabile

einphasige EuB$_6$-Sinterkörper mit C-Gehalten zwischen 0,4 und 0,6 Gewichtsprozent erhalten werden (vgl. K.A. Schwetz et al in Ceramurgia International, Vol. 5 (1979) S. 105–199).

Bei allen bisher bekannten Verfahren wurde stets davon ausgegangen, selbstgebundene polykristalline Sinterkörper aus EuB$_6$-Pulver mit stöchiometrischer Zusammensetzung ohne Zusatz von Binde- oder Sinterhilfsmitteln herzustellen, da offensichtlich die Meinung vorherrschend war, dass nur dadurch die besten Eigenschaften des Endproduktes garantiert werden könnten, wobei dann mit den bekannten Schwierigkeiten zu rechnen war, wie hoher Gewichtsverlust beim drucklosen Sintern durch Bildung von flüchtigem Europium oder Europiumverbindungen oder übermässige Aufkohlung durch Reaktion mit den Graphitformteilen beim Heisspressen, die nicht nur eine Nachbearbeitung der erhaltenen Sinterkörper erforderlich macht, sondern auch mit einem hohen Verschleiss an Formenmaterial verbunden ist, das nicht mehr wiederverwendet werden kann, wobei diese Nachteile beim Heisspressen nur durch aufwendige Massnahmen, wie genaue Temperaturkontrolle und Einsatz von sehr feinteiligen Ausgangspulvern in Grenzen gehalten werden konnten.

Für den Einsatz von Europiumhexaborid als Neutronenabsorbermaterial in der Kerntechnik ist indessen die wirtschaftliche Produktion von polykristallinen Sinterkörpern von entscheidender Bedeutung.

Es stellt sich somit die Aufgabe, polykristalline Sinterkörper auf Basis von Europiumhexaborid mit mindestens gleich guten Eigenschaften wie die bekannten Produkte zur Verfügung zu stellen, die unter Verzicht auf die bisher als Vorteil angesehene Eigenbindung des EuB$_6$ erhalten worden sind und die darüberhinaus den Vorteil haben, dass sie nicht nur durch Heisspressen in Graphitformen, sondern nach allen üblichen bekannten Sinterverfahren, wie isostatisches Heisspressen und drucklose Sinterung auf einfache und wirtschaftliche Weise hergestellt werden können.

Die erfindungsgemässen polykristallinen Sinterkörper auf Basis von Europiumhexaborid mit einer Dichte von mindestens 85% der theoretisch möglichen Dichte, bestehen aus Europiumhexaborid, 0,1 bis 10 Gewichtsprozent Borcarbid und gegebenenfalls amorphem Kohlenstoff, mit einer Gesamtsumme von Eu + B + C von mindestens 98,5 Gewichtsprozent und einer homogenen Mikrostruktur mit mittleren Korngrössen von < 20 μm, in dem neben der kristallinen Phase entsprechend der Formel EuB$_{6-x}$C$_x$, worin x Werte von 0 bis 0,25 hat, Borcarbid als getrennte, feinverteilte kristalline Phase nachweisbar ist.

Die erfindungsgemässen Sinterkörper können aus Pulvergemischen bestehend aus Europiumhexaborid und Zusätzen von Borcarbid und/oder von Gemischen aus einem Kohlenstoff enthaltenden Material und einer Borkomponente durch Sinterung mit oder ohne Druckanwendung hergestellt werden. Zusätze in Mengen von etwa 0,5 bis 12 Gewichtsprozent Borcarbid allein, bezogen

auf eingesetztes EuB$_6$-Pulver oder von äquivalenten Mengen der Gemische aus dem Kohlenstoff enthaltenden Material und der Borkomponente, wobei der Kohlenstoff auch im Überschuss vorhanden sein kann, sind dabei im allgemeinen ausreichend.

Als Ausgangsmaterial für die Pulvergemische werden vorteilhaft stöchiometrische EuB$_6$-Pulver (B/Eu = 6,0 ± 0,1) und B$_4$C-Pulver (99,5 Gew.-% B$_4$C) verwendet. Die Teilchengrössen der Europiumhexaboridpulver können dabei in Abhängigkeit von dem gewählten Sinterverfahren im Bereich von 30 μm und feiner bis 3 μm und feiner liegen. Die Borcarbidpulver werden vorteilhaft in Submikronpulverfeinheit eingesetzt, wobei als Mass für die Teilchengrösse zweckmässig die spezifische Oberfläche (gemessen nach BET) herangezogen wird. Borcarbidpulver mit einer spezifischen Oberfläche von > 18 m²/g, vorzugsweise von > 20 m²/g, haben sich hierbei besonders bewährt.

Anstelle des Borcarbidpulvers per se können jedoch auch Gemische aus amorphem Kohlenstoff oder einem zu amorphem Kohlenstoff verkokbaren organischen Material und amorphen Bor und/oder Borcarbid eingesetzt werden.

Die Herstellung der erfindungsgemässen Sinterkörper aus den Ausgangspulvergemischen kann mit Hilfe von allen bekannten Sinterverfahren durchgeführt werden, die im einzelnen wie folgt näher erläutert werden:

1. Heisspressen:

Hierzu werden als Ausgangsmaterial vorteilhaft relativ grobkörnige EuB$_6$-Pulver mit maximalen Teilchengrössen von 30 μm bis 10 μm verwendet, die verhältnismässig preisgünstig und in hoher Reinheit verfügbar sind.

Diese Pulver werden mit dem feinteiligen Borcarbidpulver durch übliche bekannte Massnahmen homogen vermischt und dann in einer üblichen Heisspresse mit Graphitformen unter einem Stempeldruck von etwa 50 MPa bei Temperaturen im Bereich von 1.800° bis 1.900°C heissgepresst. Die besten Ergebnisse werden mit einem Zusatz von 3 bis 7 Gew.-% Borcarbid, bezogen auf eingesetztes EuB$_6$-Pulver erzielt, wobei unabhängig von der Teilchengrösse des EuB$_6$-Pulvers bei Temperaturen von etwa 1.850°C Dichten von > 95% TD erreicht werden.

Die theoretisch mögliche Dichte kann dabei gemäss der Mischungsregel

$$TD = \frac{100}{\dfrac{\text{Gew.\% EuB}_{6-x}\text{C}_x}{4.91} + \dfrac{\text{Gew.\% B}_4\text{C}}{2.51}}$$

berechnet werden.

Es wird angenommen, dass die Bildung der kristallinen Phase EuB$_{6-x}$C$_x$ durch Reaktion von EuB$_6$ mit einem Teil des zugemischten Borcarbids erfolgt, wodurch Reaktionen des Sinterkörpers mit der Graphitform praktisch vollständig unterdrückt werden und die Graphitformen somit wiederverwendbar sind.

Der Anteil der kristallinen $B_4C$-Begleitphase in dem fertigen Sinterkörper kann indirekt aus der Differenz des Gesamtkohlenstoffgehalts und des im $EuB_6$-Gitter gelösten Kohlenstoffs nach folgender Gleichung ermittelt werden.

$$(C_{ges} - C_{gitter}) \times 4{,}60 = B_4C$$

$C_{ges}$ = Gew.-% Gesamtkohlenstoff, experimentell durch Verbrennung der pulverisierten Probe bei 1.050°C im Sauerstoffstrom und coulometrischer Titration des gebildeten $CO_2$ bestimmt;

$C_{gitter}$ = Gew.-% Kohlenstoff, der als feste Lösung $EuB_{6-x}C_x$ vorliegt, experimentell durch rötgenographische Gitterparametermessung und Auswertung nach Eichdiagramm bestimmt;

$B_4C$ = Gew.-% Borcarbid;

4,60 = stöchiometrischer Faktor zur Umrechnung von C auf $B_4C$ bei natürlichem B-Isotopenverhältnis.

2. Isostatisches Heisspressen:

Hierzu können als Ausgangsmaterial die gleichen, relativ grobkörnigen $EuB_6$-Pulver wie beim Heisspressen in Graphitformen verwendet und mit dem feinteiligen Borcarbidpulver homogen vermischt werden.

Für die Herstellung der erfindungsgemässen Sinterkörper kann das Pulvergemisch per se ohne weitere Vorbehandlung in vorgefertigte Hüllen oder Kapseln von beliebiger Form eingefüllt und durch Vibration verdichtet werden. Anschliessend werden die Hüllen samt Inhalt evakuiert und dann gasdicht verschlossen. Das Pulvergemisch kann jedoch auch zu Grünkörpern mit offener Porosität, das heisst mit zur Oberfläche offenen Poren vorgeformt und dann mit einer gasdichten Hülle versehen werden. Die Formgebung kann durch übliche bekannte Massnahmen, beispielsweise durch Gesenkpressen oder isostatisches Pressen bei Raumtemperatur oder erhöhter Temperatur vorgenommen werden. Nach der Formgebung sollten die Grünkörper eine theoretische Dichte von mindestens 50%, vorzugsweise 60%, bezogen auf den theoretisch möglichen Wert des Gemisches, aufweisen.

Als Material für die gasdicht verschliessbaren Hüllen können beispielsweise hochschmelzende Gläser, wie reines Kieselglas oder hochschmelzende Keramikarten verwendet werden. Bei Einsatz des Pulvergemisches per se sind vorgefertigte Hüllen oder Kapseln erforderlich, die auch bei Einsatz der vorgeformten Grünkörper Verwendung finden können. Bei vorgeformten Grünkörpern kann die gasdichte Hülle jedoch auch durch direkte Beschichtung erzeugt werden, beispielsweise durch Aufbringen einer glas- oder keramikartigen Masse, die anschliessend unter Bildung der gasdichten Hülle geschmolzen oder gesintert wird. Ausserdem ist es vorteilhaft, zwischen der Glas- oder Keramikhülle und dem zu verdichtenden Pulver oder Grünkörper eine Zwischenschicht anzubringen. Hierzu können inerte Pulver, Fasern oder Folien Verwendung finden, beispielsweise Graphitfolien und/oder Bornitridpulver.

Die gehüllten Proben werden in den Hochdruckautoklaven eingebracht und auf die erforderliche Verdichtungstemperatur von mindestens 1.750°C erhitzt. Als inerte Gase für die Druckübertragung werden vorzugsweise Argon oder Stickstoff verwendet. Der angewendete Gasdruck liegt vorzugsweise im Bereich von 150 bis 250 MPa, der unter langsamer Erhöhung bei der angewendeten Endtemperatur erreicht wird. Nach Erniedrigung von Druck und Temperatur werden die abgekühlten Körper aus dem Hochdruckautoklaven entnommen und von den Hüllen befreit, beispielsweise durch Sandstrahlbehandlung der Glas- oder Keramikhüllen.

Die besten Ergebnisse werden mit einem Zusatz von 1,5 bis 3,5 Gew.-% Borcarbid, bezogen auf eingesetztes $EuB_6$-Pulver erzielt, wobei bereits bei Temperaturen von 1.750°C bis 1.850°C Dichten von > 98%, vorzugsweise > 99% TD erreicht werden. Die so hergestellten Sinterkörper sind nicht nur praktisch porenfrei, sondern aufgrund der allseitigen Druckanwendung auch praktisch texturfrei, so dass ihre Eigenschaften nicht mehr richtungsabhängig, sondern in allen Richtungen gleichbleibend sind.

3. Drucklose Sinterung:

Hierzu werden als Ausgangsmaterial vorteilhaft relativ feinkörnige $EuB_6$-Pulver mit maximalen Teilchengrössen von 3 μm und feiner verwendet. Diese Pulver werden mit dem feinverteilten Borcarbidpulver homogen vermischt und dann unter Bildung von Grünkörpern vorgeformt. Die Formgebung kann durch übliche bekannte Massnahmen, beispielsweise durch Gesenkpressen oder isostatisches Pressen bei Raumtemperatur oder erhöhter Temperatur vorgenommen werden, wobei üblicherweise ein Druck von 30 bis 600 MPa, vorzugsweise von 100 bis 500 MPa angewendet wird. Nach der Formgebung sollten die Grünkörper eine theoretische Dichte von mindestens 50%, vorzugsweise mindestens 60%, bezogen auf die theoretisch mögliche Dichte des Gemisches aufweisen. Die vorgeformten Grünkörper werden dann in einem beliebigen Sinterofen unter Vakuum auf Temperaturen von 1.450° bis 1.550°C aufgeheizt und anschliessend unter Zutritt einer inerten Gasatmosphäre unter einem Druck von ca. 0,1 MPa auf Temperaturen von 2.050° bis 2.150°C weiter erhitzt.

Als inerte Gasatmosphäre hat sich hierbei eine Edelgasatmosphäre wie Argon, besonders bewährt. Unter dem Druck ist hierbei Normaldruck zu verstehen, der üblicherweise in der Grössenordnung von 0,1 MPa liegt.

Zur Erzielung einer ausreichenden Verdichtung ist die Steuerung von Druck und Sinteratmosphäre von entscheidender Bedeutung. Temperaturen von 2.150°C sollten nicht überschritten werden, um ein übermässiges Kornwachstum zu vermeiden. Unter den angegebenen Bedingungen werden bei Zusatz von Borcarbid, vorzugsweise in Mengen von 3 bis 7 Gew.-% Sinterdichten von > 85% TD erreicht. Die mit der drucklosen Sinterung verbundene lineare Schrumpfung von etwa 15 bis 20% läuft unter Beibehaltung der ursprünglichen geometrischen Form der Grünkörper ab und ist genau erfassbar, so dass auf eine Nachbearbeitung der Sinterkörper im allgemeinen verzichtet werden kann.

Für die Durchführung des drucklosen Sinterverfahrens ist es indessen vorteilhaft, wenn anstelle des Borcarbidpulvers per se Gemische aus einem Kohlenstoff enthaltenden Material und einer Borkomponente eingesetzt werden. Als Kohlenstoff enthaltendes Material kann Kohlenstoff per se, z.B. partikulärer Russ, wie Acetylenruss mit einer spezifischen Oberfläche im Bereich von 10 bis 400 m²/g verwendet werden. Vorzugsweise wird jedoch ein organisches Material eingesetzt, das bei Temperaturen bis zu etwa 1.000°C unter Bildung von Kohlenstoff verkokt werden kann. Beispiele hierfür sind Phenoplaste und Steinkohlenteerpech, wobei sich Phenol-Formaldehyd- Kondensationsprodukte vom Typ der Novolake und der Resole besonders bewährt haben, die im Bereich von 100° bis 900°C unter Bildung von amorphem Kohlenstoff in etwa 35- bis 50%-iger Ausbeute zersetzt werden. Als Borkomponente können amorphes Bor oder Borcarbid oder Gemische hiervon verwendet werden, wobei sich amorphes Bor besonders bewährt hat.

Die Mengen des Kohlenstoff enthaltenden Materials und der Borkomponente werden dabei vorteilhaft so bemessen, dass etwa gleiche Gewichtsmengen, berechnet als freier Kohlenstoff und als freies Bor zur Verfügung stehen. Durch diesen Überschuss an Kohlenstoff, der bis zum Dreifachen des Kohlenstoffgehalts in einer äquivalenten Borcabidmenge allein betragen kann, ist es möglich, auch Europiumhexaboridpulver, die durch das Aufmahlen auf die erforderliche Teilchengrösse von 3 µm und feiner einen Sauerstoffgehalt von bis zu etwa 5 Gew.-% aufweisen können als Ausgangsmaterial ohne zusätzliche Reinigungsmassnahmen zu verwenden.

Für das homogene Vermischen kann der Kohlenstoffzusatz in Form des organischen Materials in einem Lösungsmittel gelöst und das Gemenge aus EuB$_6$-Pulver und der Borkomponente in der Lösung dispergiert werden. Bei Einsatz von freiem Kohlenstoff per se werden EuB$_6$ und Borkomponente gemeinsam mit dem elementaren Kohlenstoff in einer Lösung eines temporären Bindemittels und/oder Gleitmittels dispergiert. Als organische Lösungsmittel können beispielsweise Aceton oder niedere aliphatische Alkohole mit 1 bis 6 C-Atomen Verwendung finden. Das Dispergieren kann durch mechanische Bewegung einer dünnflüssigen Suspension in Plastikbehältern oder durch Kneten einer dickflüssigen Suspension in einer Knetvorrichtung vorgenommen werden. Dann wird das Lösungsmittel entfernt, beispielsweise bei einer dünnflüssigen Suspension durch Sprühtrocknung oder bei einer dickflüssigen Suspension durch Abdunsten während des Knetvorgangs. Anschliessend erfolgt die Formgebung unter Bildung der Grünkörper wie oben beschrieben. Bei Einsatz des Kohlenstoffs in Form eines organischen Materials wird dieses während des Aufheizvorgangs im Vakuum verkokt, so dass bei Beginn des eigentlichen Sintervorgangs der Kohlenstoff in freier Form vorliegt.

Unter den oben genannten Bedingungen der Steuerung von Druck und Sinteratmosphäre bei den angegebenen Temperaturen werden bei Einsatz von Gemischen aus Kohlenstoff und amorphem Bor in gleichen Gewichtsmengen, vorzugsweise von jeweils 2 bis 4 Gew.-%, bezogen auf eingesetztes EuB$_6$-Pulver, Sinterdichten von > 95%, vorzugsweise >98% TD erreicht.

In den so hergestellten Sinterkörpern ist neben der festen Lösung von Kohlenstoff im EuB$_6$-Gitter und der kristallinen Borcarbidbegleitphase zusätzlich amorpher Kohlenstoff vorhanden, der analytisch nachweisbar ist. Die Sinterkörper sind stabil und unempfindlich gegen Luftfeuchtigkeit.

Obwohl demnach mehr Kohlenstoff zur Verfügung stand, als für die Bildung der festen Lösung mit begrenzter Löslichkeit des Kohlenstoffs im EuB$_6$-Gitter und für die Bildung der B$_4$C-Begleitphase aus der zusätzlichen Bormenge erforderlich war, wurden keine hydrolyseempfindlichen Begleitphasen gebildet. Dieses Ergebnis muss als überraschend bewertet werden im Hinblick auf die bekannte Tatsache, dass beim Heisspressen von EuB$_6$-Pulver allein bei Temperaturen > 2.000°C durch Reaktionen mit dem Kohlenstoff aus den Graphitformen die Bildung derartiger hydrolyseempfindlicher Phasen begünstigt ist.

Die Sinterkörper haben nicht nur ein homogenes Mikrogefüge mit mittleren Korngrössen von < 20 µm, das heisst es hatte nur ein geringes Kornwachstum stattgefunden, obleich der Druck als regelnder Parameter fehlte, sondern die erzielten Sinterdichten sind vergleichbar mit denjenigen, die durch isostatisches Heisspressen von EuB$_6$-Pulver mit Borcarbidzusatz erhalten werden können.

In den folgenden Beispielen wird die Herstellung der erfindungsgemässen polykristallinen Sinterkörper auf EuB$_6$-Basis erläutert:

Beispiel 1

Als Ausgangsmaterial wurden Europiumhexaboridpulver folgender Zusammensetzung

Eu    69,8 Gew.-%
B    29,8 Gew.-%
C    0,15 Gew.-%
B/Eu = 6,0
Sa. (Eu + B + C) = 99,75 Gew.-%

mit Teilchengrössen von 10 µm und feiner (Pulver A) und 30 µm und feiner (Pulver B) verwendet. Das verwendete Borcarbidpulver hatte eine spezifische Oberfläche von 20 m²/g.

Die Pulver A und B wurden mit 1 Gew.-%, bzw. 5 Gew.-% des Borcarbidpulvers homogen vermischt und dann in Graphitmatrizen in Gegenwart einer Argonatmosphäre unter einem Druck von 50 MPa zu Zylindern mit 10 mm Durchmesser und 15 mm Höhe bei konstanter Temperatur von 1.850°C heissgepresst.

Zum Vergleich wurden die Pulver A und B ohne Borcarbidzusatz unter den gleichen Bedingungen heissgepresst.

Mit 5 Gew.-% Borcarbidzusatz wurde bei Einsatz der Pulver A und B, das heisst unabhängig von der Teilchengrösse des verwendeten Europiumhexaboridpulvers bei 1.850°C Sinterdichten von > 95% TD erreicht.

Mit 1 Gew.-% Borcarbidzusatz wurden bei der gleichen Temperatur, ebenfalls unabhängig von der Teilchengrösse des verwendeten Europiumhexaboridpulvers Sinterdichten von > 90% TD erzielt.

Die erfindungsgemäss unter Zusatz von Borcarbid hergestellten Zylinder lassen sich nach dem Heisspressen leicht aus der Form entnehmen, das heisst, es wurde praktisch keine Reaktion mit den Graphitformen beobachtet, die somit wiederverwendbar waren.

Mit den zum Vergleich ohne Borcarbidzusatz verwendeten Pulver A wurde bei 1.850°C nur eine Sinterdichte von 63% TD erreicht. Pulver B liess sich ohne Borcarbidzusatz bei dieser Temperatur überhaupt nicht mehr heisspressen.

Beispiel 2

Als Ausgangsmaterial wurde Europiumhexaboridpulver der gleichen Zusammensetzung wie in Beispiel 1 mit einer Teilchengrösse von 20 μm und feiner verwendet, das mit 2 Gew.-% Borcarbidpulver der spezifischen Oberfläche von 20 m²/g vermischt und bei Raumtemperatur in Stahlmatrizen zu Zylindern von 10 mm Durchmesser und 15 mm Höhe verpresst wurde. Die so erhaltenen Grünkörper wurden in vorgefertigte Kieselglashüllen eingebracht und der Raum zwischen der Innenseite der Hülle und dem Grünkörper mit feinteiligem Bornitridpulver ausgefüllt. Dann wurden die Hüllen samt Inhalt evakuiert und gasdicht verschlossen. Anschliessend wurden die gehüllten Proben im Hochdruckautoklaven unter einem Argongasdruck von 200 MPa bei 1.800°C heissisostatisch verdichtet. Nach dem Verdichten wurden die Glashüllen abgeschlagen.

Die so hergestellten Sinterkörper hatten eine Dichte von >4,77 g/cm³, mit einer Summe der Bestandteile Eu + B + C von 98,74 Gew.-% und einem Gesamtkohlenstoffgehalt von 0,774 Gew.-%.

Durch rötgenographische Präzisionsmessung der Gitterkonstante wurde der in der kristallinen Phase $EuB_{6-x}C_x$ gelöste Kohlenstoff zu 0,36 Gew.-% bestimmt, entsprechend der Formel $EuB_{5,935}C_{0,065}$. Der Restgehalt von 0,414 Gew.-% C entspricht einem Gehalt von 1,9 Gew.-% $B_4C$ im Sinterkörper.

Wird der $EuB_{6-x}C_x$-Anteil zu 98,1 Gew.-% angenommen, kann die theoretisch mögliche Dichte nach der Mischungsregel wie folgt berechnet werden:

$$TD = \frac{100}{\dfrac{98,1}{4,91} + \dfrac{1,9}{2,51}} = 4,82 \ g/cm^3$$

Die experimentell ermittelte Dichte von > 4,77 g/cm³ entspricht somit 99% TD.

Durch REM-Aufnahmen wurde der Borcarbidanteil als getrennte kristalline Phase in Form von 1 bis 2 μm grossen Körnern an den Korngrenzen und Tripelpunkten der kristallinen Phase $EuB_{6-x}C_x$ mit mittleren Korngrössen von etwa 20 μm, nachgewiesen.

Beispiel 3

Als Ausgangsmaterial wurde ein $EuB_6$-Pulver folgender Zusammensetzung

Eu　69,4 Gew.-%
B　29,6 Gew.-%
C　0,2 Gew.-%
O　0,76 Gew.-%
B/Eu = 6,0
Sa. (Eu + B + C) = 99,2 Gew.-%

mit einer Teilchengrösse von 3 μm und feiner verwendet. Das verwendete Borcarbidpulver hatte eine spezifische Oberfläche von 20 m²/g.

Das Europiumhexaboridpulver wurde mit 3,5 Gew.-% des Borcarbidpulvers homogen vermischt und in Gummihüllen bei 400 MPa Flüssigkeitsdruck isostatisch zu Grünkörpern von 10 mm Durchmesser und 15 mm Höhe verpresst. Dann wurden die so erhaltenen Grünkörper aus den Hüllen entnommen und in einem Graphitheizofen unter Vakuum auf 1.500°C aufgeheizt und 1 Stunde bei dieser Temperatur belassen. Dann wurde der Ofen mit Argon geflutet und die Körper unter einem Gasdruck von 0,1 MPa auf 2.130°C erhitzt und 30 Minuten lang fertig gesintert.

Die so hergestellten Sinterkörper hatten eine Dichte von 4,30 g/cm³, mit einer Summe der Bestandteile Eu + B + C von 99,72 Gew.-%, einem Gesamtkohlenstoffgehalt von 0,52 Gew.-% und einem Sauerstoffgehalt von 0,12 Gew.-%.

Der in der kristallinen Phase $EuB_{6-x}C_x$ gelöste Kohlenstoff wurde zu 0,18 Gew.-% bestimmt. Der Restgehalt von 0,34 Gew.-% C entspricht einem Gehalt von 1,56 Gew.-% $B_4C$ im Sinterkörper.

Nach der Mischungsregel kann die theoretisch mögliche Dichte wie folgt berechnet werden:

$$TD = \frac{100}{\dfrac{98,44}{4,91} + \dfrac{1,56}{2,51}} = 4,84 \ g/cm^3$$

Die experimentell ermittelte Dichte von 4,30 g/cm³ entspricht somit 88,8% TD.

Der geringe Sauerstoffgehalt in den fertigen Sinterkörpern ist offensichtlich darauf zurückzuführen, dass ein Teil des zugesetzten Borcarbidpulvers während der drucklosen Sinterung mit dem als Europiumoxid vorliegenden Sauerstoff im Ausgangspulver unter Bildung von $EuB_6$ reagiert hat.

Beispiel 4

Als Ausgangsmaterial wurde ein Europiumhexaboridpulver folgender Zusammensetzung

Eu 66,2 Gew.-%
B 28,3 Gew.-%
C 0,3 Gew.-%
O 5,1 Gew.-%
B/Eu = 6,01
Sa. (Eu + B + C) = 94,8 Gew.-%

mit einer Teilchengrösse von 3 μm und feiner verwendet. Dieses Pulver war nach dem Aufmahlen auf die erforderliche Teilchengrösse stark aufoxidiert.

Als Kohlenstoff enthaltender Zusatz wurde ein handelsübliches, pulverförmiges Phenolformaldehydharz vom Novolak-Typ und als Borkomponente wurde amorphes Bor verwendet.

Das Europiumhexaboridpulver wurde mit 3 Gew.-% Bor und einer Lösung des Novolak-Pulvers in Aceton in einer etwa 3 Gew.-% freiem Kohlenstoff entsprechenden Menge vermischt und der flüssige Brei solange an der Luft geknetet, bis praktisch das gesamte Lösungsmittel verdunstet war. Dann wurde dieses Pulvergemisch in Gummihüllen bei 400 MPa Flüssigkeitsdruck isostatisch zu Grünkörpern von 10 mm Durchmesser und 15 mm Höhe verpresst und die so erhaltenen Grünkörper unter den gleichen Bedingungen wie in Beispiel 3 beschrieben, drucklos gesintert.

Die so hergestellten Sinterkörper hatten eine Dichte von 4,60 bis 4,63 g/cm³ mit einer Summe der Bestandteile Eu + B + C von 99,85 Gew.-% und einem Gesamtkohlenstoffgehalt von 3,05 Gew.-%.

Der in der kristallinen Phase $EuB_{6-x}C_x$ gelöste Kohlenstoff wurde zu 1,15 Gew.-% bestimmt, entsprechend der Formel $EuB_{5,79}C_{0,21}$.

Um festzustellen, in welcher Form der restliche Kohlenstoff im Sinterkörper vorliegt, wurde ein auf Teilchengrössen von < 40 μm zerkleinerter Sinterkörper in 100 ml verdünnter Salpetersäure (50 ml konz. $HNO_3$ + 50 ml $H_2O$) unter Rückfluss zum Sieden erhitzt. Dabei verblieb ein unlöslicher Rückstand von 5,81 Gew.-%, bezogen auf das Gesamtgewicht des Sinterkörpers.

In diesem unlöslichen Rückstand wurde durch Analyse ein C-Gehalt von 32,3 Gew.-% bestimmt, das entspricht 1,88 Gew.-%, bezogen auf das Gesamtgewicht des Sinterkörpers.

Aus der Differenz des unlöslichen Rückstands und des C-Gehalts ergibt sich ein B-Gehalt von 3,93 Gew.-%, der umgerechnet 5,02 Gew.-% Borcarbid im Sinterkörper entspricht, in dem 1,09 Gew.-% des Kohlenstoffs gebunden sind. Der verbleibende Rest C von 0,79 Gew.-% muss demnach als freier amorpher Kohlenstoff im Sinterkörper vorliegen.

Nach der Mischungsregel kann wegen des freien Kohlenstoffgehalts die theoretisch mögliche Dichte nur näherungsweise berechnet werden

$$TD = \frac{100}{\dfrac{94,98}{4,91} + \dfrac{5,02}{2,51}} = 4,685 \text{ g/cm}^3$$

Die experimentell ermittelten Dichten von 4,60 bis 4,63 g/cm³ entsprechen somit 98,2 bis 98,8% TD.

Durch Röntgendiffraktionsanalyse wurden in dem säureunlöslichen Rückstand nur die Linien von $B_4C$ festgestellt.

**Patentansprüche**

1. Polykristalline Sinterkörper auf Basis von Europiumhexaborid mit einer Dichte von mindestens 85% der theoretisch möglichen Dichte, bestehend aus Europiumhexaborid, dadurch gekennzeichnet, dass sie zusätzlich 0,1 bis 10 Gew.-% Borcarbid und gegebenenfalls amorphen Kohlenstoff enthalten, mit einer Gesamtsumme von Eu + B + C von mindestens 98,5 Gew.-% und einer homogenen Mikrostruktur mit mittleren Korngrössen von <20 μm, in der neben der kristallinen Phase entsprechend der Formel

$$EuB_{6-x}C_x,$$

worin x Werte von 0 bis 0,25 hat, Borcarbid als getrennte, feinverteilte, kristalline Phase nachweisbar ist.

2. Verfahren zur Herstellung der polykristallinen Sinterkörper gemäss Anspruch 1, dadurch gekennzeichnet, dass Pulvergemische, bestehend aus Europiumhexaborid von stöchiometrischer Zusammensetzung und Zusätzen von Borcarbid und/oder von Gemischen aus einem Kohlenstoff enthaltendem Material und einer Borkomponente, wobei die Zusätze in Mengen von 0,5 bis 12 Gew.-% von Borcarbid allein, bezogen auf eingesetztes Europiumhexaboridpulver oder in äquivalenten Mengen von Gemischen aus dem Kohlenstoff enthaltendem Material und der Borkomponente, wobei der Kohlenstoff auch im Überschuss vorhanden sein kann, verwendet werden, mit oder ohne Druckanwendung gesintert werden.

3. Verfahren nach Anspruch 2 zur Herstellung der polykristallinen Sinterkörper gemäss Anspruch 1 durch Heisspressen in Graphitformen, dadurch gekennzeichnet, dass die Pulvergemische, bestehend aus Europiumhexaborid und Borcarbid unter einem Stempeldruck von 50 MPa bei Temperaturen im Bereich von 1800°C bis 1900°C heissgepresst werden.

4. Verfahren nach Anspruch 2 zur Herstellung der polykristallinen Sinterkörper gemäss Anspruch 1 durch isostatisches Heisspressen im Hochdruckautoklaven unter Verwendung eines inerten Gases als Druckübertragungsmedium, dadurch gekennzeichnet, dass Pulvergemische, bestehend aus Europiumhexaborid und Borcarbid, oder aus diesen vorgeformte Grünkörper mit einer theoretisch möglichen Dichte von mindestens 50%, mit einer gasdichten Hülle versehen und unter einem Gasdruck von 150 bis 250 MPa bei Temperaturen im Bereich von 1750°C bis 1850°C isostatisch heissgepresst werden.

5. Verfahren nach Anspruch 3 oder 4, dadurch gekennzeichnet, dass als Europiumhexaboridpulver solche mit maximalen Teilchengrössen von 30 μm und feiner bis 10 μm und feiner und als Borcarbidpulver solche mit einer spezifischen Oberfläche (gemessen nach BET) von > 18 m²/g verwendet werden.

6. Verfahren nach Anspruch 2 zur Herstellung der polykristallinen Sinterkörper gemäss Anspruch 1 durch drucklose Sinterung, dadurch gekennzeichnet, dass die Pulvergemische, bestehend aus Europiumhexaborid und Borcarbid oder einem Kohlenstoff enthaltendem Material und einer Borkomponente unter Bildung von Grünkörpern mit einer theoretisch möglichen Dichte von mindestens 50% vorgeformt, die vorgeformten Grünkörper unter Vakuum auf Temperaturen von 1450°C bis 1550°C aufgeheizt und anschliessend unter Zutritt einer inerten Gasatmosphäre unter einem Druck von 0.1 MPa bei Temperaturen von 2050°C bis 2150°C drucklos gesintert werden.

7. Verfahren nach Anspruch 6, dadurch gekennzeichnet, dass als Europiumhexaboridpulver solche mit maximalen Teilchengrössen von 3 μm und feiner und als Borcarbidpulver solche mit einer spezifischen Oberfläche von > 18 m²/g verwendet werden.

8. Verfahren nach Anspruch 6, dadurch gekennzeichnet, dass als Kohlenstoff enthaltendes Material ein Phenol-Formaldehyd-Kondensationsprodukt und als Borkomponente amorphes Bor verwendet werden.

9. Verwendung der polykristallinen Sinterkörper gemäss Anspruch 1 als Neutronenabsorberwerkstoffe.


**Claims**

1. Polycrystalline sintered compacts based on europium hexaboride and having a density of at least 85% of the theoretically possible density, comprising europium hexaboride, characterised in that they contain, in addition, from 0.1 to 10% by weight of boron carbide and, optionally, amorphous carbon, and have a total of Eu + B + C of at least 98.5% by weight and have a homogeneous microstructure with mean grain sizes of less than 20 μm, in which, in addition to the crystalline phase corresponding to the formula

$EuB_{6-x}C_x$,

in which x has values of from 0 to 0.25, boron carbide can be detected as a separate, finely divided, crystalline phase.

2. Process for the manufacture of the polycrystalline sintered compacts according to claim 1, characterised in that powder mixtures comprising europium hexaboride of stoichiometric composition and additions of boron carbide, and/or of mixtures of a carbon-containing material and a boron component, the additives being used in amounts of from 0.5 to 12% by weight of boron carbide alone, based on the europium hexaboride powder used, or in equivalent amounts of mixtures of the carbon-containing material and the boron component, it being possible for the carbon also to be present in excess, are sintered with or without the application of pressure.

3. Process according to claim 2 for the manufacture of the polycristalline sintered compacts according to claim 1 by means of hot pressing in graphite moulds, characterised in that the powder mixtures, comprising europium hexaboride and boron carbide, are subjected to hot pressing under a die pressure of 50 MPa at temperatures in the range of from 1800°C to 1900°C.

4. Process according to claim 2 for the manufacture of the polycrystalline sintered compacts according to claim 1 by means of isostatic hot pressing in a highpressure autoclave using an inert gas as the pressure-transmission medium, characterised in that powder mixtures comprising europium hexaboride and boron carbide, or green bodies preshaped therefrom having a theoretically possible density of at least 50%, are provided with a gas-impermeable casing and subjected to isostatic hot pressing under a gas pressure of from 150 to 250 MPa at temperatures in the range of from 1750°C to 1850°C.

5. Process according to claim 3 or 4, characterised in that there are used, as the europium hexaboride powders, those having maximum particle sizes of from 30 μm and finer to 10 μm and finer and, as the boron carbide powders, those having a specific surface area (measured by the BET method) of more than 18 m²/g.

6. Process according to claim 2 for the manufacture of the polycrystalline sintered compacts according to claim 1 by means of pressureless sintering, characterised in that the powder mixtures, comprising europium hexaboride and boron carbide, or a carbon-containing material and a boron component, are preshaped to form green bodies having a theoretically possible density of at least 50%, the preshaped green bodies are heated under vacuum to temperatures of from 1450°C to 1550°C and then, with the access of an inert gas atmosphere and under a pressure of 0.1 MPa, the green bodies are subjected to pressureless sintering at temperatures of from 2050°C to 2150°C.

7. Process according to claim 6, characterised in that there are used, as the europium hexaboride powders, those having maximum particle sizes of 3 μm and finer and, as the boron carbide powders, those having a specific surface area of more than 18 m²/g.

8. Process according to claim 6, characterised in that a phenol-formaldehyde condensation product is used as the carbon-containing material and amorphous boron is used as the boron component.

9. Use of the polycrystalline sintered compacts according to claim 1 as neutron-absorbing materials.

## Revendications

1. Corps frittés polycristallins, à base d'hexaborure d'europium, ayant une densité représentant au moins 85% de la densité théoriquement possible, consistant en hexaborure d'europium, corps caractérisés en ce qu'ils contiennent en outre 0,1 à 10% en poids de carbure de bore et éventuellement du carbon amorphe, avec une teneur totale en (Eu + B + C) d'au moins 98,5% en poids et une microstructure homogène avec des grosseurs moyennes de grains inférieures à 20 μm, dans laquelle on peut déceler, en plus de la phase cristalline répondant à la formule:

$$EuB_{6-x}C_x$$

(dans laquelle x vaut de 0 à 0,25), du carbure de bore sous forme d'une phase cristalline distincte, finement divisée.

2. Procédé pour produire des corps frittées polycristallins selon la revendication 1, caractérisé en ce qu'on fritte, avec ou sans application d'une pression, des mélanges pulvérulents, consistant en de l'hexaborure d'europium de composition stoechiométrique et en des additions de carbure de bore et/ou de mélanges d'un matière contenant du carbone et d'un composant apportant du bore, les additions étant utilisées en des quantités de 0,5 à 12% en poids de carbure de bore seul, sur la base de la poudre d'hexaborure d'europium mise en œuvre ou en des quantités équivalentes de mélanges de la matière contenant du carbone et du composant apportant le bore, le carbone pouvant également être présent en excés.

3. Procédé selon la revendication 2, pour produire des corps frittés polycristallins selon la revendication 1, par compression à chaud dans des moules en graphite, procédé caractérisé en ce qu'on comprime à chaud, à des températures se suitant entre 1800°C et 1900°C, sous une pression de poinçon de 50 MPa, les mélanges pulvérulents, consistant en de l'hexaborure d'europium et en du carbure de bore.

4. Procédé selon la revendication 2, pour produire des corps frittés polycristallins selon la revendication 1, par compression isostatique à chaud dans des autoclaves fonctionnant sous haute pression, avec utilisation d'un gaz inerte comme milieu de transmission de la pression, procédé caractérisé en ce qu'on comprime par voie isostatique à chaud, à des températures se situant entre 1750°C et 1850°C, des mélanges pulvérulents, consistant en de l'hexaborure d'europium et en du carbure de bore, ou des corps verts préformés à partir de ces mélanges et ayant une densité représentant au moins 50% de la densité théoriquement possible, ces mélanges ou corps étant munis d'une enveloppe étanche au gaz et en ce que l'on opère sous une pression de gaz de 150 à 250 MPa.

5. Procédé selon la renvendication 3 ou 4, caractérisé en ce qu'on utilise, comme poudre d'hexaborure d'europium, une telle poudre ayant des particules de grosseur maximale égale ou inférieure à 30 μm jusqu'à 10 μm et moins et, comme poudre de carbure de bore, une telle poudre ayant une surface spécifique (mesurée d'après la méthode BET) supérieure à 18 m²/g.

6. Procédé selon la revendication 2 pour produire des corps frittés polycristallins selon la revendication 1, par frittage sans application d'une pression, procédé caractérisé en ce qu'on soumet à préfaçonnage les mélanges pulvérulents, consistant en de l'hexaborure d'europium et en du carbure de bore ou en une matière contenant du carbone et un composant apportant du bore, avec formation de corps verts ayant une densité représentant au moins 50% de la densité théoriquement possible, on chauffe sous vide les corps verts ainsi préformés, jusqu'à des températures de 1450°C à 1550°C puis on les fritte, sans application d'une pression, avec admission d'une atmosphère de gaz inerte sous une pression de 0,1 MPa, en opérant à des températures de 2050°C à 2150°C.

7. Procédé selon la revendication 6, caractérisé en ce qu'on utilise comme poudre d'hexaborure d'europium une telle poudre ayant des grosseurs maximales de particules égales ou inférieures à 3 μm et, comme poudre de carbure de bore, une telle poudre ayant une surface spécifique supérieure à 18 m²/g.

8. Procédé selon la revendication 6, caractérisé en ce qu'on utilise comme matière contenant du carbone, un produit de condensation phénol-formaldehyde et, comme composant apportant du bore, on utilise du bore amorphe.

9. Utilisation des corps frittés polycristallins selon la revendication 1, comme matériaux d'absorption de neutrons.